# EUROPEAN PATENT SPECIFICATION

(11) **EP 4 473 721 B1**
(45) Date of publication and mention of the grant of the patent: **18.03.2026**
(21) Application number: 23710152.2
(22) Date of filing: 02.02.2023
(51) Int. Cl.: H04L 67/141, H04L 67/10

(54) **SPLIT RENDERING CONFIGURATIONS**
SPLIT-RENDERING-KONFIGURATIONEN
CONFIGURATIONS DE RENDU SPLIT

(30) Priority: 03.02.2022 US 202263267517 P; 01.02.2023 US 202318163007
(43) Date of publication of application: 11.12.2024
(73) Proprietor: QUALCOMM INCORPORATED, San Diego, California 92121-1714 (US)
(72) Inventor: BOUAZIZI, Imed, San Diego, California 92121 (US); MA, Liangping, San Diego, California 92121 (US); STOCKHAMMER, Thomas, San Diego, California 92121 (US)
(74) Representative: Reddie & Grose LLP
(86) International application number: PCT/US2023/061844
(87) International publication number: WO 2023/150613

(56) References cited:
- US-A1- 2020 383 004
- "3rd Generation Partnership Project; Technical Specification Group SA; Support of 5G Glass-type Augmented Reality / Mixed Reality (AR/MR) devices; (Release 17)", no. V1.0.3, 27 October 2021 (2021-10-27), pages 1 - 90, XP052082869, Retrieved from the Internet <URL:https://ftp.3gpp.org/Specs/archive/26_series/26.998/26998-103.zip 26998-103-cl.doc> [retrieved on 20211027]

## Description

### CROSS-REFERENCE TO RELATED APPLICATIONS

This Patent Application claims priority to U.S. Provisional Patent Application No. 63/267,517, filed on February 3, 2022, entitled "SPLIT RENDERING CONFIGURATIONS," and U.S. Nonprovisional Patent Application No. 18/163,007, filed on February 1, 2023, entitled "SPLIT RENDERING CONFIGURATIONS,".

### FIELD OF THE DISCLOSURE

Aspects of the present disclosure generally relate to wireless communication and to techniques and apparatuses for establishing and/or updating split rendering configurations.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

US patent application with publication number US 2020/383004 discloses techniques for traffic burst awareness in wireless systems. An application function, such as via an application server, can determine one or more burst parameters associated with a traffic flow for at least one service. The application function can send the one or more burst parameters a network. The burst parameters may include a burst factor associated with a minimum bit rate for providing service coverage for the traffic flow and/or a burst spread. A core network and/or access network (AN) entity can obtain the burst parameters and utilize the burst factor for communicating with a user equipment (UE). The CN and/or AN may use the burst parameters for admission control, resource allocation, and/or setting sleep mode parameters.

"3rd Generation Partnership Project; Technical Specification Group SA; Support of 5G Glass-type Augmented Reality / Mixed Reality (AR/MR) devices; (Release 17)", 3GPP STANDARD; TECHNICAL REPORT; 3GPP TR 26.998, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE no. V1.0.3 27 October 2021 (2021-10-27), pages 1-90, XP052082869 discloses the integration of such new devices into 5G networks and identifies potential needs for specifications for the support of AR glasses and experiences in 5G.

### SUMMARY

The invention is defined by the independent claims to which reference should now be made. Optional features are set forth in the dependent claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of split rendering, in accordance with the present disclosure.
Fig. 4 is a diagram illustrating an example associated with split rendering configurations, in accordance with the present disclosure.
Figs. 5 and 6 are diagrams illustrating example processes associated with split rendering configurations, in accordance with the present disclosure.
Figs. 7 and 8 are diagrams of example apparatuses for wireless communication, in accordance with the present disclosure.
Fig. 9 is a diagram illustrating an example disaggregated base station architecture, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

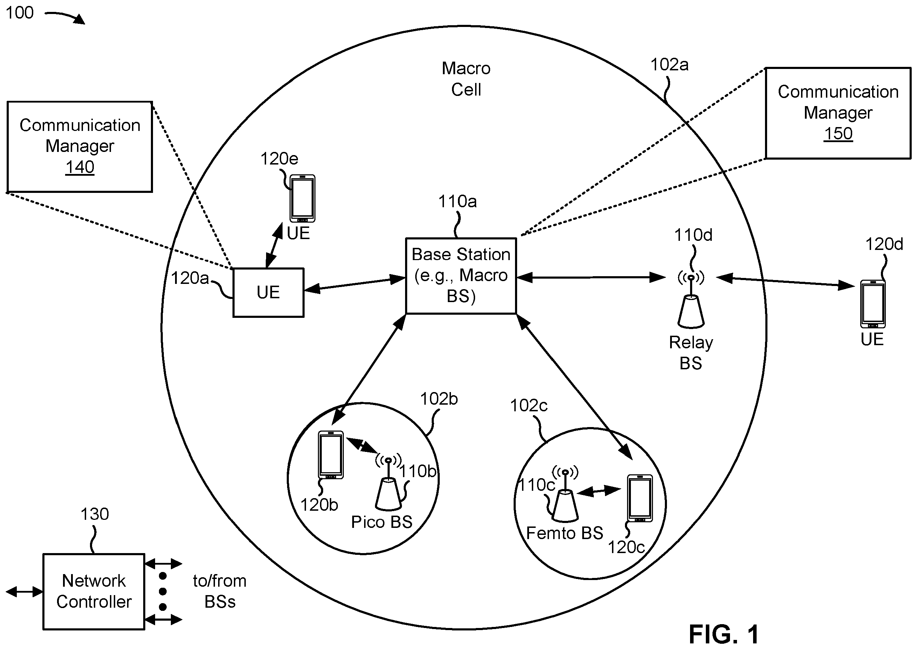

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, the UE 120 may include a communication manager 140. As described in more detail elsewhere herein, the communication manager 140 may transmit an indication of one or more parameters for a split rendering configuration with a network node; and receive an indication of acceptance of the one or more parameters for a split rendering session. Additionally, or alternatively, the communication manager 140 may perform one or more other operations described herein.

In some aspects, a network node (e.g., including one or more devices of a base station, or included in one or more devices of a base station) may include a communication manager 150. As described in more detail elsewhere herein, the communication manager 150 may receive an indication of one or more parameters for a split rendering configuration with a UE; and transmit an indication of acceptance of the one or more parameters for a split rendering session. Additionally, or alternatively, the communication manager 150 may perform one or more other operations described herein.

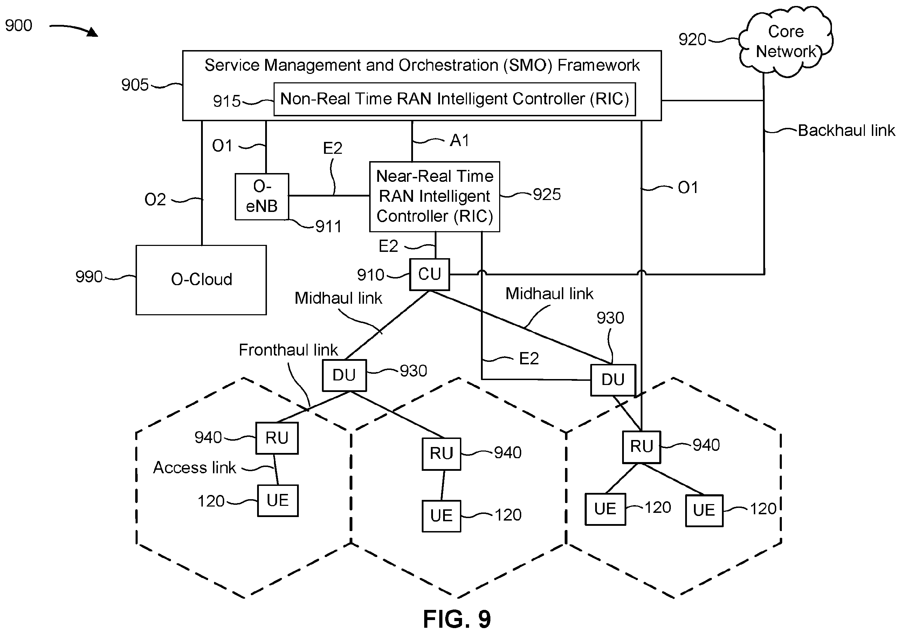

In some aspects, the term "base station" (e.g., the base station 110) or "network node" or "network entity" may refer to an aggregated base station, a disaggregated base station (e.g., described in connection with Fig. 9), an integrated access and backhaul (IAB) node, a relay node, and/or one or more components thereof. For example, in some aspects, "base station," "network node," or "network entity" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station," "network node," or "network entity" may refer to one device configured to perform one or more functions, such as those described herein in connection with the base station 110. In some aspects, the term "base station," "network node," or "network entity" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station," "network node," or "network entity" may refer to any one or more of those different devices. In some aspects, the term "base station," "network node," or "network entity" may refer to one or more virtual base stations and/or one or more virtual base station functions. For example, in some aspects, two or more base station functions may be instantiated on a single device. In some aspects, the term "base station," "network node," or "network entity" may refer to one of the base station functions and not another. In this way, a single device may include more than one base station.

As indicated above, Fig. 1 is provided as an example. Other examples may differ from what is described with regard to Fig. 1.

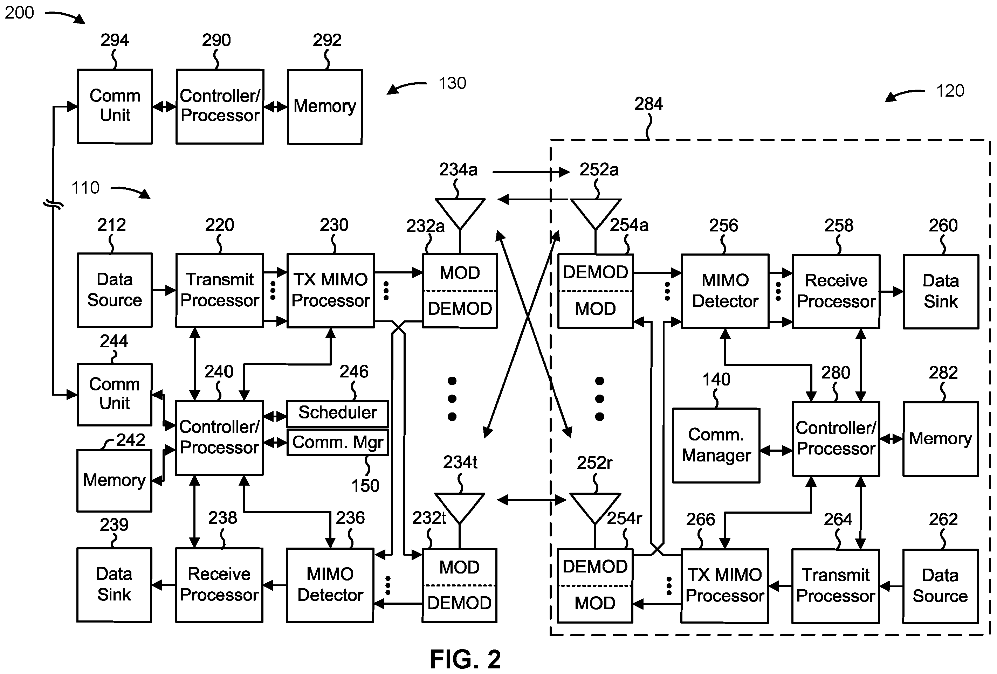

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., T output symbol streams) to a corresponding set of modems 232 (e.g., T modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., T downlink signals) via a corresponding set of antennas 234 (e.g., T antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

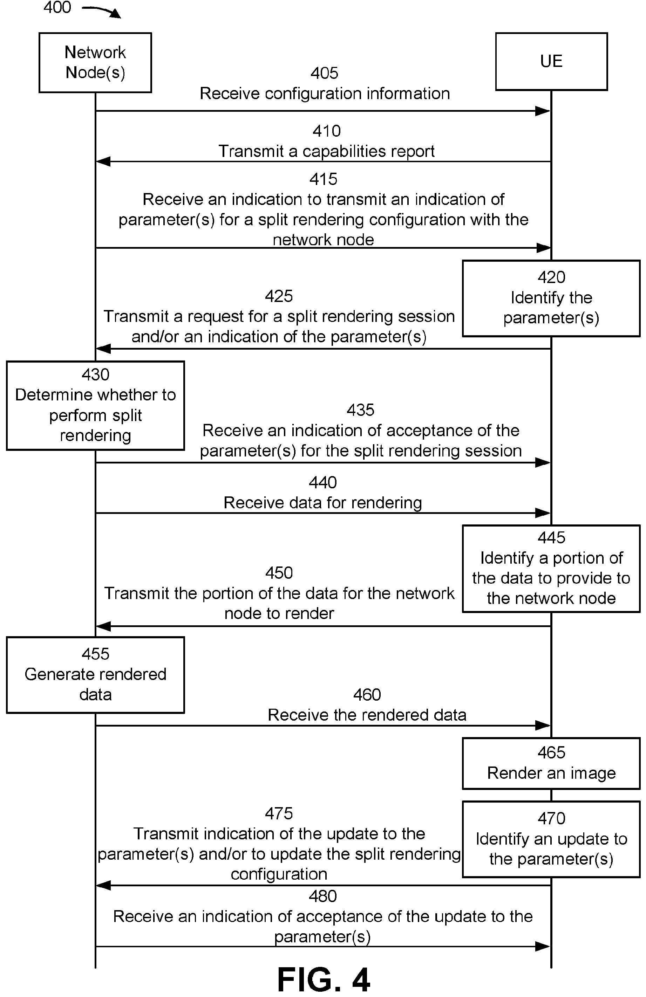

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 4-8).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 4-8).

The controller/processor 240 of the base station 110, the controller/processor 280 of the UE 120, and/or any other component(s) of Fig. 2 may perform one or more techniques associated with split rendering configurations, as described in more detail elsewhere herein. In some aspects, the network node described herein is the base station 110, is included in the base station 110, or includes one or more components of the base station 110 shown in Fig. 2.

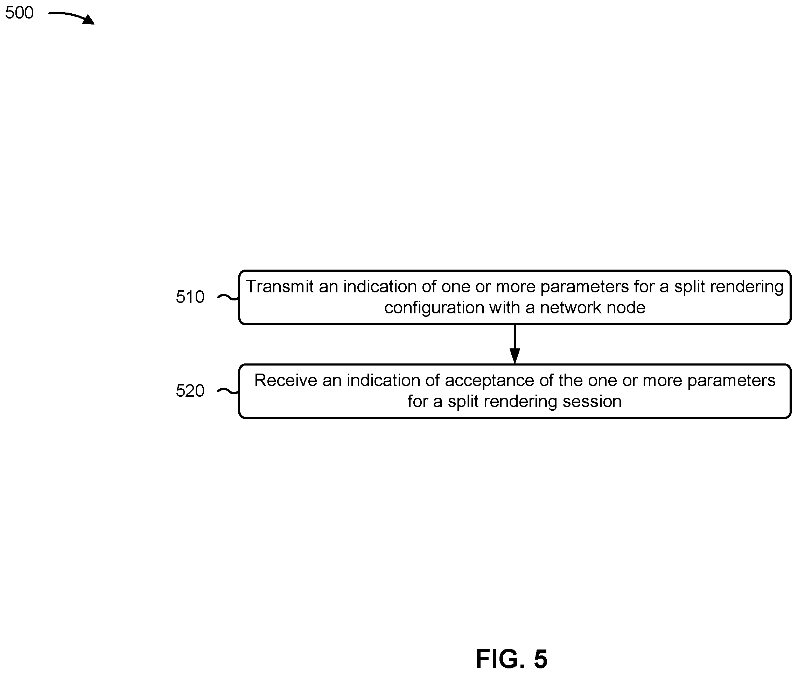

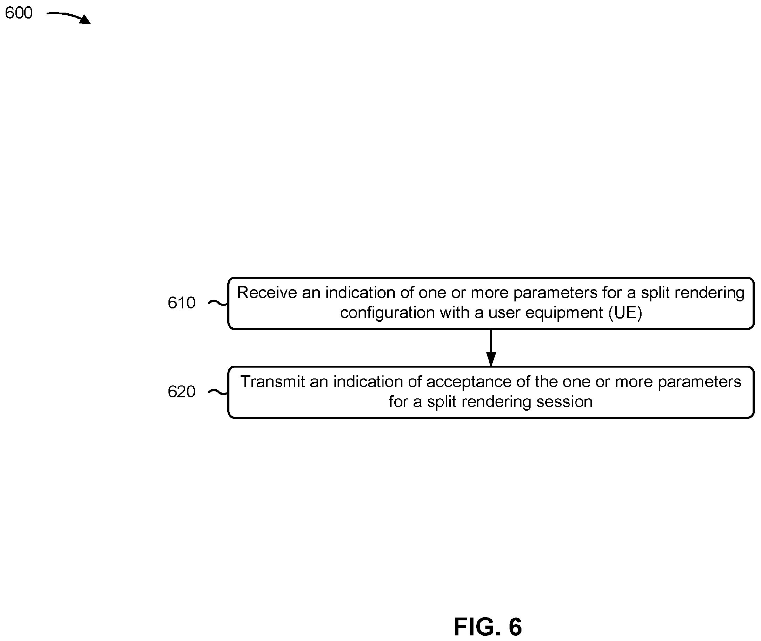

For example, the controller/processor 240 of the base station 110, the controller/processor 280 of the UE 120, and/or any other component(s) of Fig. 2 may perform or direct operations of, for example, process 500 of Fig. 5, process 600 of Fig. 6, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 500 of Fig. 5, process 600 of Fig. 6, and/or other processes as described herein. In some examples, executing instructions may include running the instructions, converting the instructions, compiling the instructions, and/or interpreting the instructions, among other examples.

In some aspects, the UE includes means for transmitting an indication of one or more parameters for a split rendering configuration with a network node; and/or means for receiving an indication of acceptance of the one or more parameters for a split rendering session. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, the network node includes means for receiving an indication of one or more parameters for a split rendering configuration with a UE; and/or means for transmitting an indication of acceptance of the one or more parameters for a split rendering session. In some aspects, the means for the network node to perform operations described herein may include, for example, one or more of communication manager 150, transmit processor 220, TX MIMO processor 230, modem 232, antenna 234, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

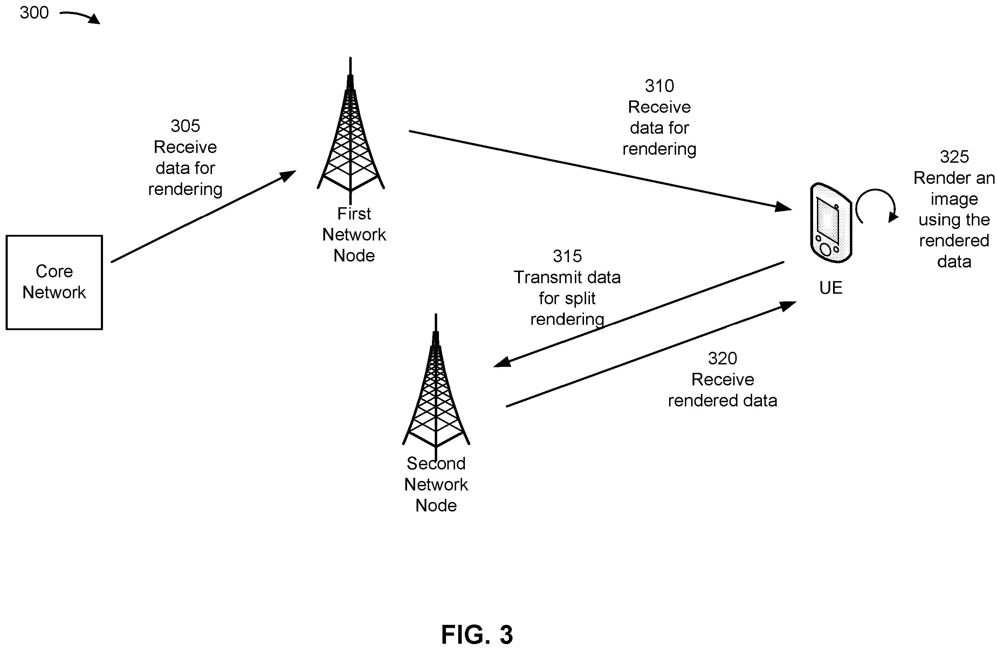

Fig. 3 is a diagram illustrating an example of split rendering, in accordance with the present disclosure. Split rendering is a configuration in which a UE and another device (e.g., a network node) work together to render an image. For example, the UE may offload some processing of data for rendering to a network node, such as an edge node, to conserve power resources of the UE, improve processing of the data, and/or improve quality of the image that is rendered. Split rendering may be used for applications that have a heavy rendering workload, such as 3-dimensional (3-D) gaming, interacting with a metaverse, virtual reality experiences, and/or augmented reality experiences, among other examples.

Some UEs may be configured with resources that enable different rendering capabilities. For example, a first UE may be configured with resources to support simple 2-dimensional (2-D) rendering, and a second UE may be configured with resources to support complex 3-D rendering. The resource may include processing capabilities that are based at least in part on a graphics processing unit (GPU), dedicated hardware, memory, and/or other hardware or software of the UE. The different resources may support one or more complex rendering operations, such as ray and path tracing, global illumination, dynamic scene lighting, and/or physically based rendering (PBR), among other examples.

As shown by reference number 305, a first network node may receive, from a core network, data for rendering. The data may include a stream of data for rendering as a 3-D image or a 2-D image, among other examples. As shown by reference number 310, the UE may receive the data for rendering from the first network node. The UE may determine that the data requires more processing or power resources than the UE can allocate to the data.

As shown by reference number 315, the UE may transmit, and a second node may receive, data for split rendering. The data for split rendering may include all or a portion of the data for rendering. For example, the UE may provide the data for split rendering as a portion of the data for rendering that the second network node can process (e.g., concurrently) while the UE processes another portion of the data for rendering. In another example, the UE may provide all of the data for rendering to the second network node and the network node may preform a first stage of processing of the data for rendering.

As shown by reference number 320, the UE may receive, from the second network node, rendered data. For example, the rendered data may include an indication of a pose, scene information, and/or lighting for an image to be rendered by the UE using the rendered data. As shown by reference number 325, the UE may render the image using the rendered data. For example, the UE may perform additional processing on the rendered data, combine the rendered data with other data of the data for rendering, and/or provide the rendered data to a display device for rendering as a visible image.

Although split rendering may conserve computing and power resources of a UE and potentially increase a quality of an image to be rendered by the UE (e.g., based at least in part on supporting more processing resources than those at the UE), quality and consumption of resources should be balanced against latency requirements of the data to be rendered. For example, if the UE offloads all of the processing to the second network node and must wait until receiving the rendered data before rendering the image, a user experience may be degrading and/or a quality of service or a service level agreement may be violated. For this reason, an amount of computing that is offloaded to the second network node, quality of the image, and latency of rendering the image may need to be balanced in configuring split rendering. However, the UE and the second network node may be unaware of information to determine an appropriate balance for a split rendering configuration. In this way, the UE may unnecessarily consume computing and power resources at the UE to ensure latency and quality requirements are satisfied.

In some aspects described herein, a UE may transmit an indication of one or more parameters for a split rendering configuration with a network node (e.g., an edge node and/or an edge server, among other examples). The network node may determine whether the network node is configured for a split rendering session that is based at least in part on the one or more parameters and may transmit an indication of acceptance or rejection of the split rendering session that is based at least in part on the one or more parameters. In this way, the network node may determine an amount of processing (e.g., rendering) to perform on the data to be rendered at the UE or a connected device. This may improve a user experience and conserve computing and power resources at the UE that may have otherwise been used to ensure latency and quality requirements are satisfied when using a network node that is not configured to determine the amount of processing to perform.

In some aspects, the one or more parameters (e.g., values of the one or more parameters) may change over time. For example, the UE may indicate that the UE supports a first amount of processing at the UE and, after detecting a change in a power state of the UE, a temperature state of the UE (e.g., overheating), or a bandwidth change (e.g., for communicating with the network node), indicate that the UE supports a second amount of processing at the UE. In this way, a workload split for rendering the data and/or the image may be adjusted based at least in part on a change of the one or more parameters. This may conserve computing and/or power resources that may have otherwise been consumed to ensure satisfaction of communication requirements (e.g., latency and quality requirements) for all values of the parameters.

The UE one or more parameters may include, or may be associated with, a rendering capability of the UE, a quality requirement of the UE or the data for rendering, and/or a latency or delay requirement for the data, among other examples.

The network node may receive the data to be rendered during a split rendering session and may generate information associated with a scene (e.g., rendered data) for rendering by the UE or a device in communication with the UE (e.g., a headset, glasses, a display, or a projector, among other examples). The network node may generate the information associated with the scene based at least in part on the rendering capability, the quality requirement, and/or the latency requirement, among other examples. The information may include a pose configuration (e.g., a direction in which the UE indicates a focus for the scene) and/or a scene description.

In some aspects, the information associated with the scene may have a resolution, a set of candidate effects, and/or quality that is based at least in part on the rendering capability, the quality requirement, and/or the latency requirement. In some aspects, the network node may configure an accuracy and/or updating frequency of pose information that is based at least in part on satisfying the rendering capability, the quality requirement, and/or the latency requirement, among other examples.

In some aspects, the one or more parameters may indicate the rendering capability, such as a maximum complexity of the scene, a maximum number of primitives and/or triangles per frame, a maximum number of texture streams, a maximum number of texels per frame, a maximum number of nodes, and/or a maximum number of materials, among other examples, for a scene that the UE can render. In some aspects, the rendering capability may indicate support or lack of support for scene lighting (e.g., whether light sources are accepted in the scene). In some aspects, the one or more parameters may indicate a decoding capability (e.g., blocks per second) and/or a memory capability of the UE. In some aspects, the one or more parameters indicate a latency requirement (e.g., a maximum latency), a maximum bandwidth (e.g., based at least in part on hardware and/or power resources), and/or a desired quality (e.g., image resolution, texture accuracy, image details, among other examples) for the scene.

In some aspects, the network node may perform one or more operations on data for rendering. For example, the network node may cull a scene based on a current pose (e.g., refrain from rendering data that is out of view based in part on the pose) and/or decimate mesh nodes of the image to satisfy a maximum polygon count (e.g., 10 polygons) to reduce detail of a mesh for the image, among other examples.

Based at least in part on the UE failing to support scene lighting (e.g., a rendering operation) at the UE, the network node may bake lighting into rendered data to be delivered to the UE. Additionally, or alternatively, based at least in part on a quality requirement, the network node may perform path tracing, global illumination, ambient occlusions, may generate baked textures based at least in part on a current or predicted pose associated with the UE, and/or may generate image-based light maps of the image. In some aspects, based at least in part on texture support by the UE and UE decoding capabilities, the network node may adjust a texture resolution, simplify materials or other features of the image, generate left and right eye buffers (e.g., for a headset or glasses of the UE) and/or render the data for simple geometry (e.g., with fewer than 10 polygons for the image).

Additionally, or alternatively, the network node may adjust an accuracy of a pose based at least in part on a split rendering configuration. An accuracy of the pose may be associated with an accuracy of a position and orientation of a camera associated with the UE that is associated with a viewing angle of the UE. The accuracy may be based at least in part on an age of information indicating the pose. For example, a negative age indicates that the pose is a prediction of an expected pose of the UE. If full rendering is performed by the network node, the pose information may correspond to a time when the frame will be rendered at the UE or a connected device.

A frequency of the pose may be based at least in part on how often the UE transmits pose information to the network node. A low frequency of the pose may be used for split rendering configurations where the network node provides an entire 3-D scene to the UE for rendering. In this case, because the UE already has the entire 3-D scene, a change in pose at the UE can be handled by the UE by rendering a different portion of the 3-D scend that corresponds to an updated pose. In some aspects, pose information may include multiple pairs of time and pose indications where the UE provides multiple predicted poses and a pose history to the network node.

Fig. 4 is a diagram of an example 400 associated with split rendering configurations, in accordance with the present disclosure. As shown in Fig. 4, one or more network nodes (e.g., base station 110, an RU, an edge node, and/or an edge node, among other examples) may communicate with a UE (e.g., UE 120). In some aspects, the network node and the UE may be part of a wireless network (e.g., wireless network 100). The UE and at least one of the one or more network nodes may have established a wireless connection prior to operations shown in Fig. 4.

As shown by reference number 405, the at least one network node (e.g., a base station and/or an RU) may transmit, and the UE may receive, configuration information. In some aspects, the UE may receive the configuration information via one or more of radio resource control (RRC) signaling, one or more medium access control (MAC) control elements (CEs), and/or downlink control information (DCI), among other examples. In some aspects, the configuration information may include an indication of one or more configuration parameters (e.g., already known to the UE and/or previously indicated by the at least one network node or other network device) for selection by the UE, and/or explicit configuration information for the UE to use to configure the UE, among other examples.

In some aspects, the configuration information may indicate that the UE is to use split rendering within the wireless network. In some aspects, the configuration information may indicate one or more network nodes that are available for split rendering and/or may indicate how to establish a split rendering session with the one or more network nodes that are available.

The UE may configure itself based at least in part on the configuration information. In some aspects, the UE may be configured to perform one or more operations described herein based at least in part on the configuration information.

As shown by reference number 410, the UE may transmit, and the network node may receive, a capabilities report. In some aspects, the capabilities report may indicate UE support for split rendering configurations. In some aspects, the capabilities report may indicate support for dynamic configurations for split rendering (e.g., where a split rendering configuration can be updated during a split rendering sessions).

As shown by reference number 415, the UE may receive, and the base station may transmit, an indication to transmit an indication of one or more parameters for a split rendering configuration for split rendering with an available network node (e.g., an edge node or an edge server).

As shown by reference number 420, the UE may identify the one or more parameters. For example, the UE may identify support for one or more one or more types of rendering at the UE, a complexity of a scene that the UE can render, a device capability, a latency requirement, a bandwidth requirement (e.g., a maximum bandwidth threshold), and/or a quality requirement (e.g., resolution, a set of candidate textures to render, and/or other details for the image).

As shown by reference number 425, the UE may transmit, and a network node of the one or more network nodes (e.g., an edge node or edge server) may receive, a request for a split rendering session and/or an indication of the one or more parameters or the split rendering session. In some aspects, the request and/or the indication may identify an available network node (e.g., an edge node or an edge server) requested for the split rendering session. In some aspects, the indication of the one or more parameters may indicate an update to values of the one or more parameters previously indicated for the split rendering session.

In some aspects, the one or more parameters include a rendering capability of the UE, a quality parameter for the split rendering session, an available bandwidth for the split rendering session, and/or a latency parameter for the split rendering session. For example, a rendering capability may indicate a scene complexity threshold for which the UE supports rendering, a decoding capability of the UE, an availability of power resources of the UE, a projection capability of the UE, or availability of computing resources of the UE for rendering an image, among other examples.

As shown by reference number 430, the network node may determine whether to perform split rendering with the UE. For example, the network node may determine whether the network node has resources to support a split rendering session with the UE and/or whether the network node supports satisfying the latency requirement, the quality requirement and/or the bandwidth requirement for the split rendering session.

As shown by reference number 435, the UE may receive, and the network node may transmit, an indication of acceptance of the one or more parameters for the split rendering session. Additionally, or alternatively, the UE and the network node may establish the split rendering session and a configuration for the split rendering session. In some aspects, the UE may receive the indication of acceptance within a configuration for a split rendering session. In some aspects, the indication of acceptance may indicate acceptance of a subset of all parameters indicated by the UE.

As shown by reference number 440, the UE may receive data for rendering. In some aspects, the UE may receive the data for rendering from an additional network node of the one or more network nodes, such as a base station and/or an RU of the wireless network.

As shown by reference number 445, the UE may identify a portion of the data to provide to the network node. For example, the UE may determine to provide all of the data to the network node. In some aspects, the UE may perform one or more processing operations on the data before transmission to the network node, and/or in parallel to processing at the network node (e.g., after transmitting the data to the network node).

As shown by reference number 450, the UE may transmit, and the network node (e.g., the edge node or the edge server) may receive, the portion of the data for the network node to render. In some aspects, portion of the data for the network node to render may include, or may be transmitted with, an indication of one or more poses of the UE (e.g., information associated with one or more of a position or an orientation of the UE). The one or more poses may include a history of poses and associated display time stamps and/or a set of predicted poses for the UE in a subsequent pose update. In some aspects, the UE may transmit the indication of the one or more poses and/or the portion of the data with an update frequency that is based at least in part on the split rendering configuration. The indication of the one or more poses may include multiple pairs of timing indications (e.g., display timestamps) and pose information elements to indicate when different poses are measured and/or expected at the UE. In some aspects, the indication of the one or more poses may indicate a location of the UE and/or an orientation of the UE, among other examples.

As shown by reference number 455, the network node may generate the rendered data. In some aspects, generating the rendered data may include configuring a complexity of the rendered data that is based at least in part on the latency requirement, the bandwidth requirement, the quality requirement, and/or the rendering capabilities of the UE, among other examples. The rendered data may include one or more of pose information or scene information that is based at least in part on the one or more parameters. For example, the rendered data may be associated with one or more poses that are predicted for the UE and/or that are indicated in, or with, the portion of the data for the network to render. In some aspects, the pos information may be based at least in part on receiving the indication of the one or more poses of the UE (e.g., pose and an associated display stamp).

In some aspects, pose information and/or scene information of the generated rendered data may have an accuracy that is based at least in part on the split rendering configuration. For example, with a split rendering configuration that updates pose information infrequently, the scene information may be less accurate than if the pose information is updated with increased frequency. The accuracy of the pose information and/or the scene information may be associated with an age of the one or more of the pose information or the scene information at arrival to the network node or UE or at rendering by the UE.

As shown by reference number 460, the UE may receive, and the network node may transmit, the rendered data. For example, the network node may transmit the rendered data based at least in part on the bandwidth requirement of the one or more parameters indicated by the UE.

In this way, the network node may provide rendering support with a determined amount of processing (e.g., rendering) to perform on the data to be rendered at the UE or a connected device. This may improve a user experience and conserve computing and power resources at the UE that may have otherwise been used to ensure latency and quality requirements are satisfied when using a network node that is not configured to determine the amount of processing to perform.

As shown by reference number 465, the UE may render an image based at least in part on the rendered data. In some aspects, the image may have a quality, resolution, and other details that are based at least in part on the latency requirement, the bandwidth requirement, the quality requirement, and/or the rendering capabilities of the UE, among other examples.

As shown by reference number 470, the UE may identify an update to the one or more parameters. For example, the UE may detect a change in temperature (e.g., overheating) at the UE or a change of a power state (e.g., entering or leaving a power saving mode), among other examples.

As shown by reference number 475, the UE may transmit, and the network node (e.g., the edge node or the edge server) may receive, an indication of the update to the one or more parameters and/or to update the split rendering configuration. For example, the UE may transmit an update to values of the one or more parameters previously indicated for the split rendering session and/or a request to update the split rendering configuration (e.g., based at least in part on the update to the one or more parameters).

As shown by reference number 480, the UE may receive, and the network node may transmit, an indication of acceptance of the update to the one or more parameters.

Based at least in part on the UE and the network node supporting updates to a split rendering configuration during a split rendering session, the UE may update parameters for the split rendering session after detecting a change in a power state of the UE, a temperature state of the UE (e.g., overheating), or a bandwidth change (e.g., for communicating with the network node), among other examples. In this way, a workload split for rendering the data and/or the image may be adjusted based at least in part on a change of the one or more parameters. This may conserve computing and/or power resources that may have otherwise been consumed to ensure satisfaction of communication requirements (e.g., latency and quality requirements) for all values of the parameters.

As indicated above, Fig. 4 is provided as an example. Other examples may differ from what is described with regard to Fig. 4.

Fig. 5 is a diagram illustrating an example process 500 performed, for example, by a UE, in accordance with the present disclosure. Example process 500 is an example where the UE (e.g., UE 120) performs operations associated with split rendering configurations.

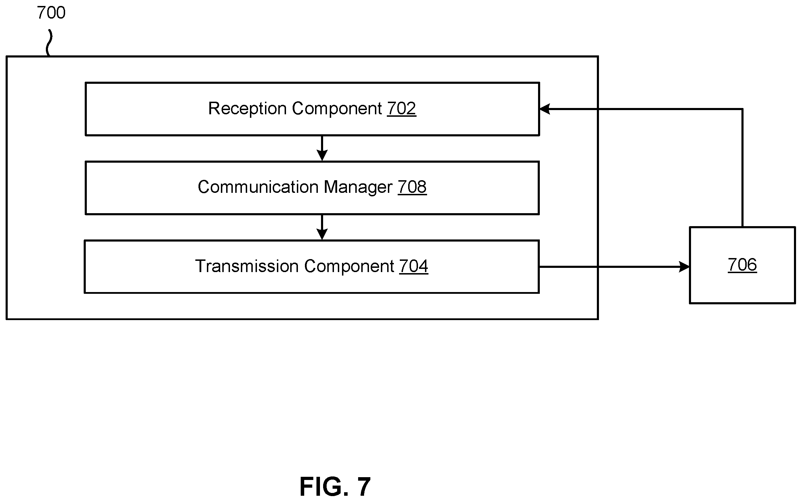

As shown in Fig. 5, in some aspects, process 500 may include transmitting an indication of one or more parameters for a split rendering configuration with a network node (block 510). For example, the UE (e.g., using communication manager 140 and/or transmission component 704, depicted in Fig. 7) may transmit an indication of one or more parameters for a split rendering configuration with a network node, as described above.

As further shown in Fig. 5, in some aspects, process 500 may include receiving an indication of acceptance of the one or more parameters for a split rendering session (block 520). For example, the UE (e.g., using communication manager 140 and/or reception component 702, depicted in Fig. 7) may receive an indication of acceptance of the one or more parameters for a split rendering session, as described above.

Process 500 may include additional aspects, such as any single aspect or any combination of aspects described below and/or in connection with one or more other processes described elsewhere herein.

In a first aspect, the one or more parameters comprise one or more of a rendering capability of the UE, a quality parameter for the split rendering session, an available bandwidth for the split rendering session, or a latency parameter for the split rendering session.

In a second aspect, alone or in combination with the first aspect, a rendering capability of the UE indicates one or more of a scene complexity threshold for which the UE supports rendering, a decoding capability of the UE, an availability of power resources of the UE, or availability of computing resources of the UE.

In a third aspect, alone or in combination with one or more of the first and second aspects, transmitting the indication of the one or more parameters comprises one or more of transmitting an update to values of the one or more parameters previously indicated for the split rendering session, or transmitting a request to update the split rendering configuration.

In a fourth aspect, alone or in combination with one or more of the first through third aspects, process 500 includes receiving, as part of the split rendering session, one or more of pose information or scene information that is based at least in part on the one or more parameters.

In a fifth aspect, alone or in combination with one or more of the first through fourth aspects, the one or more of pose information or scene information has an accuracy that is based at least in part on the split rendering configuration, or wherein the one or more of pose information or scene information is received with an update frequency that is based at least in part on the split rendering configuration.

In a sixth aspect, alone or in combination with one or more of the first through fifth aspects, the accuracy of the one or more of the pose information or scene information is associated with an age of the one or more of the pose information or the scene information at arrival to the network node or UE or at rendering by the UE.

In a seventh aspect, alone or in combination with one or more of the first through sixth aspects, the pose information is associated with one or more of a position or an orientation of the UE.

In an eighth aspect, alone or in combination with one or more of the first through seventh aspects, the pose information is associated with a prediction of one or more of a position or an orientation of the UE.

In a ninth aspect, alone or in combination with one or more of the first through eighth aspects, the pose information comprises multiple pairs of timing indications and pose information elements.

Although Fig. 5 shows example blocks of process 500, in some aspects, process 500 may include additional blocks, fewer blocks, different blocks, or differently arranged blocks than those depicted in Fig. 5. Additionally, or alternatively, two or more of the blocks of process 500 may be performed in parallel.

Fig. 6 is a diagram illustrating an example process 600 performed, for example, by a network node, in accordance with the present disclosure. Example process 600 is an example where the network node (e.g., base station 110, an edge node, and/or an edge server) performs operations associated with split rendering configurations.

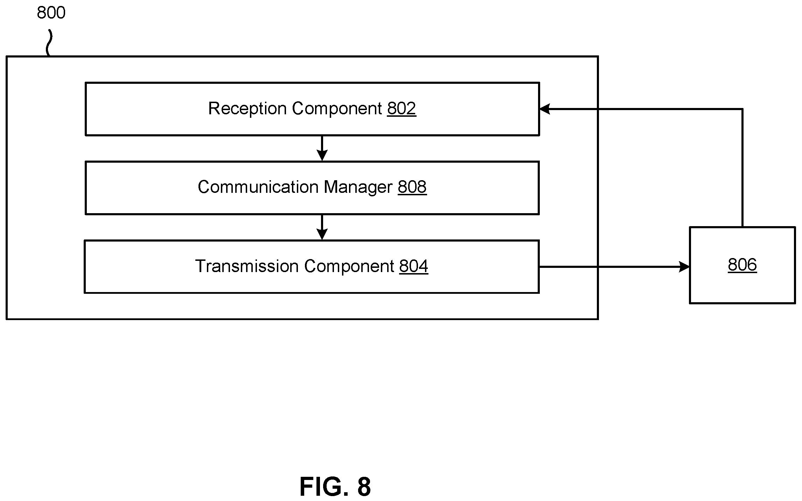

As shown in Fig. 6, in some aspects, process 600 may include receiving an indication of one or more parameters for a split rendering configuration with a UE (block 610). For example, the network node (e.g., using communication manager 808 and/or reception component 802, depicted in Fig. 8) may receive an indication of one or more parameters for a split rendering configuration with a UE, as described above.

As further shown in Fig. 6, in some aspects, process 600 may include transmitting an indication of acceptance of the one or more parameters for a split rendering session (block 620). For example, the network node (e.g., using communication manager 808 and/or transmission component 804, depicted in Fig. 8) may transmit an indication of acceptance of the one or more parameters for a split rendering session, as described above.

Process 600 may include additional aspects, such as any single aspect or any combination of aspects described below and/or in connection with one or more other processes described elsewhere herein.

In a first aspect, the one or more parameters comprise one or more of a rendering capability of the UE, a quality parameter for the split rendering session, an available bandwidth for the split rendering session, or a latency parameter for the split rendering session.

In a second aspect, alone or in combination with the first aspect, a rendering capability of the UE indicates one or more of a scene complexity threshold for which the UE supports rendering, a decoding capability of the UE, an availability of power resources of the UE, or availability of computing resources of the UE.

In a third aspect, alone or in combination with one or more of the first and second aspects, receiving the indication of the one or more parameters comprises one or more of receiving an update to values of the one or more parameters previously indicated for the split rendering session, or receiving a request to update the split rendering configuration.

In a fourth aspect, alone or in combination with one or more of the first through third aspects, process 600 includes transmitting, as part of the split rendering session, one or more of pose information or scene information that is based at least in part on the one or more parameters.

In a fifth aspect, alone or in combination with one or more of the first through fourth aspects, the one or more of pose information or scene information has an accuracy that is based at least in part on the split rendering configuration, or wherein the one or more of pose information or scene information is received with an update frequency that is based at least in part on the split rendering configuration.

In a sixth aspect, alone or in combination with one or more of the first through fifth aspects, the accuracy of the one or more of the pose information or scene information is associated with an age of the one or more of the pose information or the scene information at arrival to the network node or UE or at rendering by the UE.

In a seventh aspect, alone or in combination with one or more of the first through sixth aspects, the pose information is associated with one or more of a position or an orientation of the UE.

In an eighth aspect, alone or in combination with one or more of the first through seventh aspects, the pose information is associated with a prediction of one or more of a position or an orientation of the UE.

In a ninth aspect, alone or in combination with one or more of the first through eighth aspects, the pose information comprises multiple pairs of timing indications and pose information elements.

In a tenth aspect, alone or in combination with one or more of the first through ninth aspects, process 600 includes performing rendering on rendering data based at least in part on the one or more parameters.

In an eleventh aspect, alone or in combination with one or more of the first through tenth aspects, process 600 includes receiving the rendering data from the UE, or receiving the rendering data from an additional network node.

In a twelfth aspect, alone or in combination with one or more of the first through eleventh aspects, performing rendering on the rendering data based at least in part on the one or more parameters comprises one or more of culling a scene based at least in part on a current pose associated with the UE, reducing detail of a mesh for rendering the scene to satisfy a polygon threshold of the UE, combining lighting information into the scene, combining texture information into the scene, configuring a texture resolution of the scene, configuring a materials detail of the scene, or configuring a resolution of the scene.

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

Fig. 7 is a diagram of an example apparatus 700 for wireless communication. The apparatus 700 may be a UE, or a UE may include the apparatus 700. In some aspects, the apparatus 700 includes a reception component 702 and a transmission component 704, which may be in communication with one another (for example, via one or more buses and/or one or more other components). As shown, the apparatus 700 may communicate with another apparatus 706 (such as a UE, a base station, or another wireless communication device) using the reception component 702 and the transmission component 704. As further shown, the apparatus 700 may include a communication manager 708 (e.g., the communication manager 140).

In some aspects, the apparatus 700 may be configured to perform one or more operations described herein in connection with Fig 4. Additionally, or alternatively, the apparatus 700 may be configured to perform one or more processes described herein, such as process 500 of Fig. 5. In some aspects, the apparatus 700 and/or one or more components shown in Fig. 7 may include one or more components of the UE described in connection with Fig. 2. Additionally, or alternatively, one or more components shown in Fig. 7 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 702 may receive communications, such as reference signals, control information, data communications, or a combination thereof, from the apparatus 706. The reception component 702 may provide received communications to one or more other components of the apparatus 700. In some aspects, the reception component 702 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 700. In some aspects, the reception component 702 may include one or more antennas, a modem, a demodulator, a MIMO detector, a receive processor, a controller/processor, a memory, or a combination thereof, of the UE described in connection with Fig. 2.

The transmission component 704 may transmit communications, such as reference signals, control information, data communications, or a combination thereof, to the apparatus 706. In some aspects, one or more other components of the apparatus 700 may generate communications and may provide the generated communications to the transmission component 704 for transmission to the apparatus 706. In some aspects, the transmission component 704 may perform signal processing on the generated communications (such as filtering, amplification, modulation, digital-to-analog conversion, multiplexing, interleaving, mapping, or encoding, among other examples), and may transmit the processed signals to the apparatus 706. In some aspects, the transmission component 704 may include one or more antennas, a modem, a modulator, a transmit MIMO processor, a transmit processor, a controller/processor, a memory, or a combination thereof, of the UE described in connection with Fig. 2. In some aspects, the transmission component 704 may be co-located with the reception component 702 in a transceiver.

The transmission component 704 may transmit an indication of one or more parameters for a split rendering configuration with a network node. The reception component 702 may receive an indication of acceptance of the one or more parameters for a split rendering session.

The reception component 702 may receive, as part of the split rendering session, one or more of pose information or scene information that is based at least in part on the one or more parameters.

The number and arrangement of components shown in Fig. 7 are provided as an example. In practice, there may be additional components, fewer components, different components, or differently arranged components than those shown in Fig. 7. Furthermore, two or more components shown in Fig. 7 may be implemented within a single component, or a single component shown in Fig. 7 may be implemented as multiple, distributed components. Additionally, or alternatively, a set of (one or more) components shown in Fig. 7 may perform one or more functions described as being performed by another set of components shown in Fig. 7.

Fig. 8 is a diagram of an example apparatus 800 for wireless communication. The apparatus 800 may be a network node, or a network node may include the apparatus 800. In some aspects, the apparatus 800 includes a reception component 802 and a transmission component 804, which may be in communication with one another (for example, via one or more buses and/or one or more other components). As shown, the apparatus 800 may communicate with another apparatus 806 (such as a UE, a base station, or another wireless communication device) using the reception component 802 and the transmission component 804. As further shown, the apparatus 800 may include a communication manager 808 (e.g., the communication manager 150).

In some aspects, the apparatus 800 may be configured to perform one or more operations described herein in connection with Fig. 4. Additionally, or alternatively, the apparatus 800 may be configured to perform one or more processes described herein, such as process 600 of Fig. 6. In some aspects, the apparatus 800 and/or one or more components shown in Fig. 8 may include one or more components of the network node described in connection with Fig. 2. Additionally, or alternatively, one or more components shown in Fig. 8 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 802 may receive communications, such as reference signals, control information, data communications, or a combination thereof, from the apparatus 806. The reception component 802 may provide received communications to one or more other components of the apparatus 800. In some aspects, the reception component 802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 800. In some aspects, the reception component 802 may include one or more antennas, a modem, a demodulator, a MIMO detector, a receive processor, a controller/processor, a memory, or a combination thereof, of the network node described in connection with Fig. 2.

The transmission component 804 may transmit communications, such as reference signals, control information, data communications, or a combination thereof, to the apparatus 806. In some aspects, one or more other components of the apparatus 800 may generate communications and may provide the generated communications to the transmission component 804 for transmission to the apparatus 806. In some aspects, the transmission component 804 may perform signal processing on the generated communications (such as filtering, amplification, modulation, digital-to-analog conversion, multiplexing, interleaving, mapping, or encoding, among other examples), and may transmit the processed signals to the apparatus 806. In some aspects, the transmission component 804 may include one or more antennas, a modem, a modulator, a transmit MIMO processor, a transmit processor, a controller/processor, a memory, or a combination thereof, of the network node described in connection with Fig. 2. In some aspects, the transmission component 804 may be co-located with the reception component 802 in a transceiver.

The reception component 802 may receive an indication of one or more parameters for a split rendering configuration with a UE. The transmission component 804 may transmit an indication of acceptance of the one or more parameters for a split rendering session.

The transmission component 804 may transmit, as part of the split rendering session, one or more of pose information or scene information that is based at least in part on the one or more parameters.

The communication manager 808 may perform rendering on rendering data based at least in part on the one or more parameters.

The reception component 802 may receive the rendering data from the UE.

The reception component 802 may receive the rendering data from an additional network node.

The number and arrangement of components shown in Fig. 8 are provided as an example. In practice, there may be additional components, fewer components, different components, or differently arranged components than those shown in Fig. 8. Furthermore, two or more components shown in Fig. 8 may be implemented within a single component, or a single component shown in Fig. 8 may be implemented as multiple, distributed components. Additionally, or alternatively, a set of (one or more) components shown in Fig. 8 may perform one or more functions described as being performed by another set of components shown in Fig. 8.

Fig. 9 is a diagram illustrating an example 900 disaggregated base station architecture, in accordance with the present disclosure.

Deployment of communication systems, such as 5G NR systems, may be arranged in multiple manners with various components or constituent parts. In a 5G NR system, or network, a network node, a network entity, a mobility element of a network, a RAN node, a core network node, a network element, or a network equipment, such as a base station (BS, e.g., base station 110), or one or more units (or one or more components) performing base station functionality, may be implemented in an aggregated or disaggregated architecture. For example, a BS (such as a Node B (NB), eNB, NR BS, 5G NB, access point (AP), a TRP, a cell, or the like) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or CUs, one or more DUs, or one or more RUs). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual centralized unit (VCU), a virtual distributed unit (VDU), or a virtual radio unit (VRU).

Base station-type operation or network design may consider aggregation characteristics of base station functionality. For example, disaggregated base stations may be utilized in an IAB network, an O-RAN (such as the network configuration sponsored by the O-RAN Alliance), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

The disaggregated base station architecture shown in Fig. 9 may include one or more CUs 910 that can communicate directly with a core network 920 via a backhaul link, or indirectly with the core network 920 through one or more disaggregated base station units (such as a Near-RT RIC 925 via an E2 link, or a Non-RT RIC 915 associated with a Service Management and Orchestration (SMO) Framework 905, or both). A CU 910 may communicate with one or more DUs 930 via respective midhaul links, such as an F1 interface. The DUs 930 may communicate with one or more RUs 940 via respective fronthaul links. The RUs 940 may communicate with respective UEs 120 via one or more radio frequency (RF) access links. In some implementations, the UE 120 may be simultaneously served by multiple RUs 940.

Each of the units (e.g., the CUs 910, the DUs 930, the RUs 940), as well as the Near-RT RICs 925, the Non-RT RICs 915, and the SMO Framework 905, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as an RF transceiver), configured to receive or transmit signals, or both, over a wireless transmission medium to one or more of the other units.

In some aspects, the CU 910 may host one or more higher layer control functions. Such control functions can include RRC, packet data convergence protocol (PDCP), service data adaptation protocol (SDAP), or the like. Each control function can be implemented with an interface configured to communicate signals with other control functions hosted by the CU 910. The CU 910 may be configured to handle user plane functionality (e.g., Central Unit - User Plane (CU-UP)), control plane functionality (e.g., Central Unit - Control Plane (CU-CP)), or a combination thereof. In some implementations, the CU 910 can be logically split into one or more CU-UP units and one or more CU-CP units. The CU-UP unit can communicate bidirectionally with the CU-CP unit via an interface, such as the E1 interface when implemented in an O-RAN configuration. The CU 910 can be implemented to communicate with the DU 930, as necessary, for network control and signaling.

The DU 930 may correspond to a logical unit that includes one or more base station functions to control the operation of one or more RUs 940. In some aspects, the DU 930 may host one or more of a radio link control (RLC) layer, a MAC layer, and one or more high physical (PHY) layers (such as modules for forward error correction (FEC) encoding and decoding, scrambling, modulation and demodulation, or the like) depending, at least in part, on a functional split, such as those defined by the 3GPP. In some aspects, the DU 930 may further host one or more low-PHY layers. Each layer (or module) can be implemented with an interface configured to communicate signals with other layers (and modules) hosted by the DU 930, or with the control functions hosted by the CU 910.

Lower-layer functionality can be implemented by one or more RUs 940. In some deployments, an RU 940, controlled by a DU 930, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 940 can be implemented to handle over the air (OTA) communication with one or more UEs 120. In some implementations, real-time and non-real-time aspects of control and user plane communication with the RU(s) 940 can be controlled by the corresponding DU 930. In some scenarios, this configuration can enable the DU(s) 930 and the CU 910 to be implemented in a cloud-based RAN architecture, such as a vRAN architecture.

The SMO Framework 905 may be configured to support RAN deployment and provisioning of non-virtualized and virtualized network elements. For non-virtualized network elements, the SMO Framework 905 may be configured to support the deployment of dedicated physical resources for RAN coverage requirements which may be managed via an operations and maintenance interface (such as an O1 interface). For virtualized network elements, the SMO Framework 905 may be configured to interact with a cloud computing platform (such as an open cloud (O-Cloud) 990) to perform network element life cycle management (such as to instantiate virtualized network elements) via a cloud computing platform interface (such as an O2 interface). Such virtualized network elements can include, but are not limited to, CUs 910, DUs 930, RUs 940 and Near-RT RICs 925. In some implementations, the SMO Framework 905 can communicate with a hardware aspect of a 4G RAN, such as an open eNB (O-eNB) 911, via an O1 interface. Additionally, in some implementations, the SMO Framework 905 can communicate directly with one or more RUs 940 via an O1 interface. The SMO Framework 905 also may include a Non-RT RIC 915 configured to support functionality of the SMO Framework 905.

The Non-RT RIC 915 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 925. The Non-RT RIC 915 may be coupled to or communicate with (such as via an A1 interface) the Near-RT RIC 925. The Near-RT RIC 925 may be configured to include a logical function that enables near-real-time control and optimization of RAN elements and resources via data collection and actions over an interface (such as via an E2 interface) connecting one or more CUs 910, one or more DUs 930, or both, as well as an O-eNB, with the Near-RT RIC 925.

In some implementations, to generate AI/ML models to be deployed in the Near-RT RIC 925, the Non-RT RIC 915 may receive parameters or external enrichment information from external servers. Such information may be utilized by the Near-RT RIC 925 and may be received at the SMO Framework 905 or the Non-RT RIC 915 from non-network data sources or from network functions. In some examples, the Non-RT RIC 915 or the Near-RT RIC 925 may be configured to tune RAN behavior or performance. For example, the Non-RT RIC 915 may monitor long-term trends and patterns for performance and employ AI/ML models to perform corrective actions through the SMO Framework 905 (such as reconfiguration via O1) or via creation of RAN management policies (such as A1 policies).

As indicated above, Fig. 9 is provided as an example. Other examples may differ from what is described with regard to Fig. 9.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A user equipment, UE (120), for wireless communication, comprising:
a memory (282); and
one or more processors (280), coupled to the memory (282), configured to:
transmit an indication of one or more parameters for a split rendering configuration with a network node; and
receive an indication of acceptance of the one or more parameters for a split rendering session.

2. The UE (120) of claim 1, wherein the one or more parameters comprise one or more of:
a rendering capability of the UE,
a quality parameter for the split rendering session,
an available bandwidth for the split rendering session, or
a latency parameter for the split rendering session, and wherein:
a rendering capability of the UE indicates one or more of:
a scene complexity threshold for which the UE supports rendering,
a decoding capability of the UE,
an availability of power resources of the UE,
a projection capability of the UE, or
availability of computing resources of the UE.

3. The UE (120) of claim 1, wherein the one or more processors (280), to transmit the indication of the one or more parameters, are configured to:
transmit an update to values of the one or more parameters previously indicated for the split rendering session; or
transmit a request to update the split rendering configuration.

4. The UE (120) of claim 1, wherein the one or more processors (280) are further configured to:
receive, as part of the split rendering session, one or more of pose information or scene information that is based at least in part on the one or more parameters.

5. The UE (120) of claim 4, wherein the one or more of pose information or scene information has an accuracy that is based at least in part on the split rendering configuration, or
wherein the one or more of pose information or scene information is received with an update frequency that is based at least in part on the split rendering configuration, and wherein:
the accuracy of the one or more of the pose information or scene information is associated with an age of the one or more of the pose information or the scene information at arrival to the network node or at rendering by the UE.

6. The UE (120) of claim 4, wherein the pose information comprises multiple pairs of timing indications and pose information elements.

7. The UE (120) of claim 4, further comprising:
transmitting an indication of a pose and display timestamp to the network node,
wherein the pose information is based at least in part on the indication of the pose and display timestamp, and wherein:
the indication of the pose and display timestamp comprises one or more of:
an indication of multiple pairs of poses and display timestamps,
an indication of a location of the UE. or
an orientation of the UE.

8. A network node (110) for wireless communication, comprising:
a memory (242); and
one or more processors (240), coupled to the memory (242), configured to:
receive an indication of one or more parameters for a split rendering configuration with a user equipment (UE); and
transmit an indication of acceptance of the one or more parameters for a split rendering session.

9. The network node (110) of claim 8, wherein the one or more parameters comprise one or more of:
a rendering capability of the UE,
a quality parameter for the split rendering session,
an available bandwidth for the split rendering session, or
a latency parameter for the split rendering session, and wherein:
a rendering capability of the UE indicates one or more of:
a scene complexity threshold for which the UE supports rendering,
a decoding capability of the UE,
an availability of power resources of the UE,
a projection capability of the UE, or
availability of computing resources of the UE.

10. The network node (110) of claim 8, wherein the one or more processors (240), to receive the indication of the one or more parameters, are configured to:
receive an update to values of the one or more parameters previously indicated for the split rendering session; or
receive a request to update the split rendering configuration.

11. The network node (110) of claim 8, wherein the one or more processors (240) are further configured to:
transmit, as part of the split rendering session, one or more of pose information or scene information that is based at least in part on the one or more parameters.

12. The network node (110) of claim 11, wherein the one or more of pose information or scene information has an accuracy that is based at least in part on the split rendering configuration, or
wherein the one or more of pose information or scene information is received with an update frequency that is based at least in part on the split rendering configuration, and wherein:
the accuracy of the one or more of the pose information or scene information is associated with an age of the one or more of the pose information or the scene information at arrival to the network node or at rendering by the UE.

13. The network node (110) of claim 11, further comprising:
receiving an indication of a pose and display timestamp from the UE,
wherein the pose information is based at least in part on the indication of the pose and display timestamp, and wherein:
the indication of the pose and display timestamp comprises one or more of:
an indication of multiple pairs of poses and display timestamps,
an indication of a location of the UE. or
an orientation of the UE.

14. A method (500) of wireless communication performed by a user equipment, UE, comprising:
transmitting (510) an indication of one or more parameters for a split rendering configuration with a network node; and
receiving (520) an indication of acceptance of the one or more parameters for a split rendering session.

15. A method (600) of wireless communication performed by a network node, comprising:
receiving (610) an indication of one or more parameters for a split rendering configuration with a user equipment, UE; and
transmitting (620) an indication of acceptance of the one or more parameters for a split rendering session.

## Patentansprüche

1. UE (User Equipment) (120) für drahtlose Kommunikation, das Folgendes umfasst:
einen Speicher (282); und
einen oder mehrere Prozessoren (280), die mit dem Speicher (282) gekoppelt und konfiguriert sind zum:
Senden einer Angabe eines oder mehrerer Parameter für eine Split-Rendering-Konfiguration mit einem Netzwerkknoten; und
Empfangen einer Angabe der Annahme der ein oder mehreren Parameter für eine Split-Rendering-Sitzung.

2. UE (120) nach Anspruch 1, wobei die ein oder mehreren Parameter eines oder mehrere umfassen von:
einer Rendering-Fähigkeit des UE,
einem Qualitätsparameter für die Split-Rendering-Sitzung,
einer verfügbaren Bandbreite für die Split-Rendering-Sitzung und
einem Latenzparameter für die Split-Rendering-Sitzung, und wobei:
eine Rendering-Fähigkeit des UE eines oder mehrere angibt von:
einem Szenenkomplexitätsschwellenwert, für den das UE Rendering unterstützt,
einer Decodierfähigkeit des UE,
einer Verfügbarkeit von Leistungsressourcen des UE,
einer Projektionsfähigkeit des UE und
Verfügbarkeit von Rechenressourcen des UE.

3. UE (120) nach Anspruch 1, wobei die ein oder mehreren Prozessoren (280), zum Senden der Angabe der ein oder mehreren Parameter, konfiguriert sind zum:
Senden einer Aktualisierung von Werten der ein oder mehreren zuvor für die Split-Rendering-Sitzung angegebenen Parameter; oder
Senden einer Anforderung zum Aktualisieren der Split-Rendering-Konfiguration.

4. UE (120) nach Anspruch 1, wobei die ein oder mehreren Prozessoren (280) ferner konfiguriert sind zum:
Empfangen, als Teil der Split-Rendering-Sitzung, von Poseninformationen und/oder Szeneninformationen, die zumindest teilweise auf den ein oder mehreren Parametern basieren.

5. UE (120) nach Anspruch 4, wobei die Poseninformationen und/oder Szeneninformationen eine Genauigkeit haben, die zumindest teilweise auf der Split-Rendering-Konfiguration basiert, oder
wobei die Poseninformationen und/oder Szeneninformationen mit einer Aktualisierungsfrequenz empfangen werden, die zumindest teilweise auf der Split-Rendering-Konfiguration basiert, und wobei:
die Genauigkeit der Poseninformationen und/oder Szeneninformationen mit einem Alter der Poseninformationen und/oder der Szeneninformationen bei der Ankunft am Netzwerkknoten oder beim Rendern durch das UE assoziiert ist.

6. UE (120) nach Anspruch 4, wobei die Poseninformationen mehrere Paare von Zeitangaben und Poseninformationselementen umfassen.

7. UE (120) nach Anspruch 4, das ferner Folgendes umfasst:
Senden einer Angabe einer Pose und eines Anzeigezeitstempels zu dem Netzwerkknoten,
wobei die Poseninformationen zumindest teilweise auf der Angabe der Pose und des Anzeigezeitstempels basieren, und wobei:
die Anzeige der Pose und des Anzeigezeitstempels eines oder mehrere umfasst von:
einer Anzeige mehrerer Paare von Posen und Anzeigezeitstempeln,
einer Anzeige eines Orts des UE oder
einer Orientierung des UE.

8. Netzwerkknoten (110) für drahtlose Kommunikation, der Folgendes umfasst:
einen Speicher (242); und
einen oder mehrere Prozessoren (240), die mit dem Speicher (242) gekoppelt und konfiguriert sind zum:
Empfangen einer Angabe eines oder mehrerer Parameter für eine Split-Rendering-Konfiguration mit einem UE (User Equipment); und
Senden einer Angabe der Annahme der ein oder mehreren Parameter für eine Split-Rendering-Sitzung.

9. Netzwerkknoten (110) nach Anspruch 8, wobei die ein oder mehreren Parameter eines oder mehrere umfassen von:
einer Rendering-Fähigkeit des UE,
einem Qualitätsparameter für die Split-Rendering-Sitzung,
einer verfügbaren Bandbreite für die Split-Rendering-Sitzung und
einem Latenzparameter für die Split-Rendering-Sitzung, und wobei:
eine Rendering-Fähigkeit des UE eines oder mehrere angibt von:
einem Szenenkomplexitätsschwellenwert, für den das UE Rendering unterstützt,
einer Decodierfähigkeit des UE,
einer Verfügbarkeit von Leistungsressourcen des UE,
einer Projektionsfähigkeit des UE und
Verfügbarkeit von Rechenressourcen des UE.

10. Netzwerkknoten (110) nach Anspruch 8, wobei die ein oder mehreren Prozessoren (240), zum Empfangen der Angabe der ein oder mehreren Parameter, konfiguriert sind zum:
Empfangen einer Aktualisierung auf Werte der ein mehreren zuvor für die Split-Rendering-Sitzung angegebenen Parameter; oder
Empfangen einer Anforderung zum Aktualisieren der Split-Rendering-Konfiguration.

11. Netzwerkknoten (110) nach Anspruch 8, wobei die ein oder mehreren Prozessoren (240) ferner konfiguriert sind zum:
Senden, als Teil der Split-Rendering-Sitzung, von Poseninformationen und/oder Szeneninformationen, die zumindest teilweise auf den ein oder mehreren Parametern basieren.

12. Netzwerkknoten (110) nach Anspruch 11, wobei die Poseninformationen und/oder Szeneninformationen eine Genauigkeit haben, die zumindest teilweise auf der Split-Rendering-Konfiguration basiert, oder
wobei die Poseninformationen und/oder Szeneninformationen mit einer Aktualisierungsfrequenz empfangen werden, die zumindest teilweise auf der Split-Rendering-Konfiguration basiert, und wobei:
die Genauigkeit der Poseninformationen und/oder Szeneninformationen mit einem Alter der Poseninformationen und/oder Szeneninformationen bei der Ankunft am Netzwerkknoten oder beim Rendern durch das UE assoziiert ist.

13. Netzwerkknoten (110) nach Anspruch 11, der ferner Folgendes umfasst:
Empfangen einer Angabe einer Pose und eines Anzeigezeitstempels von dem UE,
wobei die Poseninformationen zumindest teilweise auf der Angabe der Pose und des Anzeigezeitstempels basieren, und wobei:
die Angabe der Pose und des Anzeigezeitstempels eines oder mehrere umfasst von:
einer Angabe mehrerer Paare von Posen und Anzeigezeitstempeln,
einer Angabe eines Standorts des UE und
einer Orientierung des UE.

14. Verfahren (500) zur drahtlosen Kommunikation, durchgeführt von einem UE (User Equipment), das Folgendes beinhaltet:
Senden (510) einer Angabe eines oder mehrerer Parameter für eine Split-Rendering-Konfiguration mit einem Netzwerkknoten; und
Empfangen (520) einer Angabe der Annahme der ein oder mehreren Parameter für eine Split-Rendering-Sitzung.

15. Verfahren (600) zur drahtlosen Kommunikation, durchgeführt von einem Netzwerkknoten, das Folgendes beinhaltet:
Empfangen (610) einer Angabe eines oder mehrerer Parameter für eine Split-Rendering-Konfiguration mit einem UE (User Equipment); und
Senden (620) einer Angabe der Annahme der ein oder mehreren Parameter für eine Split-Rendering-Sitzung.

## Revendications

1. Équipement utilisateur, UE (120), de communication sans fil, comprenant :
une mémoire (282) ; et
un ou plusieurs processeurs (280), couplés à la mémoire (282), configurés pour :
transmettre une indication d'un ou plusieurs paramètres pour une configuration de rendu composite avec un nœud de réseau ; et
recevoir une indication d'acceptation des un ou plusieurs paramètres pour une session de rendu composite.

2. UE (120) selon la revendication 1, dans lequel les un ou plusieurs paramètres comprennent un ou plusieurs des paramètres suivants :
une capabilité de rendu de l'UE,
un paramètre de qualité pour la session de rendu composite,
une bande passante disponible pour la session de rendu composite, ou
un paramètre de latence pour la session de rendu composite, et dans lequel :
une capabilité de rendu de l'UE indique un ou plusieurs des facteurs suivants :
un seuil de complexité de scène pour lequel l'UE prend en charge un rendu,
une capabilité de décodage de l'UE,
une disponibilité de ressources énergétiques de l'UE,
une capabilité de projection de l'UE, ou
une disponibilité de ressources informatiques de l'UE.

3. UE (120) selon la revendication 1, dans lequel pour transmettre l'indication des un ou plusieurs paramètres, les un ou plusieurs processeurs (280) sont configurés pour :
transmettre une mise à jour de valeurs des un ou plusieurs paramètres précédemment indiqués pour la session de rendu composite ; ou
transmettre une demande de mise à jour de la configuration de rendu composite.

4. UE (120) selon la revendication 1, dans lequel les un ou plusieurs processeurs (280) sont configurés en outre pour :
recevoir, dans le cadre de la session de rendu composite, une ou plusieurs informations de pose ou informations de scène qui sont basées au moins en partie sur les un ou plusieurs paramètres.

5. UE (120) selon la revendication 4, dans lequel les une ou plusieurs informations de pose ou informations de scène ont une précision basée au moins en partie sur la configuration de rendu composite, ou
dans lequel les une ou plusieurs informations de pose ou informations de scène sont reçues avec une fréquence de mise à jour basée au moins en partie sur la configuration de rendu composite, et dans lequel :
la précision des une ou plusieurs informations de pose ou informations de scène est associée à un âge des une ou plusieurs informations de pose ou informations de scène à l'arrivée au nœud de réseau ou au moment du rendu par l'UE.

6. UE (120) selon la revendication 4, dans lequel les informations de pose comprennent de multiples paires d'indications de synchronisation et d'éléments d'information de pose.

7. UE (120) selon la revendication 4, comprenant en outre :
la transmission d'une indication d'une pose et d'un horodatage d'affichage au nœud de réseau,
dans lequel les informations de pose sont basées au moins en partie sur l'indication de la pose et de l'horodatage d'affichage, et dans lequel :
l'indication de la pose et de l'horodatage d'affichage comprennent une ou plusieurs :
d'une indication de multiples paires de poses et d'horodatages d'affichage,
d'une indication d'un emplacement de l'UE, ou
d'une orientation de l'UE.

8. Nœud de réseau (110) destiné à la communication sans fil, comprenant :
une mémoire (242) ; et
un ou plusieurs processeurs (240), couplés à la mémoire (242), configurés pour :
recevoir une indication d'un ou plusieurs paramètres pour une configuration de rendu composite avec un équipement utilisateur (UE) ; et
transmettre une indication d'acceptation des un ou plusieurs paramètres pour une session de rendu composite.

9. Nœud de réseau (110) selon la revendication 8, dans lequel les un ou plusieurs paramètres comprennent un ou plusieurs des paramètres suivants :
une capabilité de rendu de l'UE,
un paramètre de qualité pour la session de rendu composite,
une bande passante disponible pour la session de rendu composite, ou
un paramètre de latence pour la session de rendu composite, et dans lequel :
une capabilité de rendu de l'UE indique un ou plusieurs des facteurs suivants :
un seuil de complexité de scène pour lequel l'UE prend en charge un rendu,
une capabilité de décodage de l'UE,
une disponibilité de ressources énergétiques de l'UE,
une capabilité de projection de l'UE, ou
une disponibilité de ressources informatiques de l'UE.

10. Nœud de réseau (110) selon la revendication 8, dans lequel les un ou plusieurs processeurs (240), pour recevoir l'indication des un ou plusieurs paramètres, sont configurés pour :
recevoir une mise à jour de valeurs des un ou plusieurs paramètres précédemment indiqués pour la session de rendu composite ; ou
recevoir une demande de mise à jour de la configuration de rendu composite.

11. Nœud de réseau (110) selon la revendication 8, dans lequel les un ou plusieurs processeurs (240) sont configurés en outre pour :
transmettre, dans le cadre de la session de rendu composite, une ou plusieurs informations de pose ou informations de scène qui sont basées au moins en partie sur les un ou plusieurs paramètres.

12. Nœud de réseau (110) selon la revendication 11, dans lequel les une ou plusieurs informations de pose ou informations de scène ont une précision basée au moins en partie sur la configuration de rendu composite, ou
dans lequel les une ou plusieurs informations de pose ou informations de scène sont reçues avec une fréquence de mise à jour basée au moins en partie sur la configuration de rendu composite, et dans lequel :
la précision des une ou plusieurs informations de pose ou informations de scène est associée à l'âge des une ou plusieurs informations de pose ou informations de scène à l'arrivée au nœud de réseau ou au moment du rendu par l'UE.

13. Nœud de réseau (110) selon la revendication 11, comprenant en outre :
la réception d'une indication d'une pose et d'un horodatage d'affichage à partir de l'UE,
dans lequel les informations de pose sont basées au moins en partie sur l'indication de la pose et de l'horodatage d'affichage, et dans lequel :
l'indication de la pose et de l'horodatage d'affichage comprend une ou plusieurs :
d'une indication de multiples paires de poses et d'horodatages d'affichage,
d'une indication d'un emplacement de l'UE, ou
d'une orientation de l'UE.

14. Procédé (500) de communication sans fil réalisé par un équipement utilisateur, UE, comprenant :
la transmission (510) d'une indication d'un ou plusieurs paramètres pour une configuration de rendu composite avec un nœud de réseau ; et
la réception (520) d'une indication d'acceptation des un ou plusieurs paramètres pour une session de rendu composite.

15. Procédé (600) de communication sans fil réalisé par un nœud de réseau, comprenant :
la réception (610) d'une indication d'un ou plusieurs paramètres pour une configuration de rendu composite avec un équipement utilisateur, UE ; et
la transmission (620) d'une indication d'acceptation des un ou plusieurs paramètres pour une session de rendu composite.
